Europäisches Patentamt

European Patent Office

Office européen des brevets

(11) Veröffentlichungsnummer: **0 205 748**

**A1**

(12) **EUROPÄISCHE PATENTANMELDUNG**

(21) Anmeldenummer: **86102425.5**

(22) Anmeldetag: **25.02.86**

(51) Int. Cl.⁴: **C05D 9/02 , C07C 101/28**

(30) Priorität: **11.05.85 DE 3517102**

(43) Veröffentlichungstag der Anmeldung:
**30.12.86 Patentblatt 86/52**

(84) Benannte Vertragsstaaten:
**AT BE CH DE FR GB IT LI LU NL SE**

(71) Anmelder: **Benckiser-Knapsack GmbH
Dr. Albert-Reimann-Strasse 2
D-6802 Ladenburg(DE)**

(72) Erfinder: **Auel, Theodor, Dr. Dipl. chem.
Winzerstrasse 3
D-6803 Edingen-Neckarhausen(DE)**
Erfinder: **Müller-Starke, Hans, Dr. Dipl.-chem.
Quinckestrasse 36
D-6900 Heidelberg(DE)**

(74) Vertreter: **Grussdcrf, Jürgen, Dr. et al
Patentanwäite Zellentin & Partner
Rubensstrasse 30
D-6700 Ludwigshafen(DE)**

(54) **Stabile Lösungen von Metallchelaten, Verfahren zu ihrer Herstellung und ihre Verwendung als Spurenelementdünger.**

(57) Die vorliegende Erfindung betrifft lagerstabile wäßrige Lösungen, die Chelatkomplexe der Metalle Eisen, Mangan, Kupfer, Zink oder Kobalt mit Aminocarbonsäuren als Chelatbildner enthalten. Sie sind dadurch gekennzeichnet, daß Nitratsalze der entsprechenden Metallionen mit den Chelatbildnern in wäßriger Lösung vermischt sind und der pH-Wert der Lösung 4 bis 8 beträgt.

Diese Lösungen gewährleisten eine hohe Pflanzenverfügbarkeit der Metallionen bei der Anwendung als Spurenelementdünger auch in Gegenwart der Hauptnährstoffe. Sie sind weiterhin insbesondere pH-tolerant und lagerstabil.

EP 0 205 748 A1

## Stabile Lösungen von Metallchelaten, Verfahren zu ihrer Herstellung und ihre Verwendung als Spurenelementdünger

Die vorliegende Erfindung betrifft stabile Lösungen von Metallchelaten, Verfahren zu ihrer Herstellung und ihre Verwendung als Spurenelementdünger. In den erfindungsgemäßen Spurenelementdüngern können die Metalle Eisen, Mangan, mit einer oder mehreren N-Carboxyalkylaminosäuren, einzeln oder in Kombination mehrerer Spurenelemente, vorliegen.

Die erfindungsgemäßen Lösungen können eines oder mehrere der oben genannten Spurenelemente in chelatisierter Form enthalten; darüber hinaus bor als lösliches Borat oder Borsäure sowie Molybdän in Form wasserlöslicher Molybdate.

Die normale pflanzliche Entwicklung erfordert ein ausreichendes Angebot an Hauptnährstoffen wie Stickstoff, Phosphor, Kalium, Calcium und Magnesium, aber auch an Spurennährstoffen wie Eisen, Mangan, Bor, Molybdän, Kupfer, Zink und Kobalt, um nur einige zu nennen.

Unterbleibt die Zufuhr eines dieser Elemente oder ist die Zufuhr ungenügend, treten bei der Pflanze Mangelerkrankungen auf.

Sehr häufig ergeben sich Mangelerkrankungen auch aufgrund einer unzureichenden Verfügbarkeit der Spurenelemente. Unzureichende Verfügbarkeit für die Pflanze kann beispielsweise gegeben sein, wenn die Spurenelemente in Form schwerlöslicher Verbindungen, insbesondere als Hydroxide, Oxide oder Phosphate vorliegen.

Bekannt ist beispielsweise die durch Eisenmangel hervorgerufene Chloroseerkrankung. Sie läßt sich beheben durch Zufuhr geeigneter löslicher Eisenverbindungen. Hier haben sich vor allem Eisenchelatkomplexe von Aminocarbonsäuren, insbesondere der Ethylendiamintetraessigsäure (EDTA), der Diethylentriaminpentaessigsäure (DTPA), der N-Hydroxyethyl-ethylendiamintriessigsäure (HEEDTA) sowie der Ethylendiamin-di-(o-hydroxyphenyl-essigsäure) - (EDDHA) bewährt.

Zufuhr löslicher nicht-chelatisierter Eisenverbindungen ist nicht geeignet, die Chlorose nachhaltig zu beheben. Die Eisenionen werden, besonders bei hohem pH-Wert, z. B. in unlösliches Eisenhydroxid oder Eisenphosphat überführt und können von der Pflanze nicht aufgenommen werden.

Aus diesen Gründen werden die genannten Chelatkomplexe zur Behandlung und Vorbeugung von Spurenelementmangelerscheinungen und zur Ertragssteigerung eingesetzt.

Die Düngung erfolgt überwiegend mit festen oder pastösen Produkten.

Seit einiger Zeit gewinnt, insbesondere bei Gemüse und Blumen, der Anbau in Substratkultur - (Hydrokultur) immer stärker an Bedeutung. Bei dieser Anbauweise werden die Pflanzen auf geeigneten porösen Materialien, beispielsweise Steinwolle, porösem Ton oder geschäumten Kunststoffen unter Zufuhr der zum Wachstum erforderlichen Haupt-und Spurennährstoffe kultiviert.

Die Nährstoffe werden der Pflanze in gelöster Form kontinuierlich zugeführt. Um eine optimale Versorgung mit Nährstoffen zu gewährleisten, wurden automatisch arbeitende Dosierstationen entwickelt, die das jeder Pflanzensorte angepaßte Nährstoffangebot aus verschiedenen Vorratslösungen zusammenstellen und über geeignete Fördereinrichtungen zur Pflanze transportieren.

Voraussetzung für den störungsfreien Betrieb solcher automatischer Dosierstationen ist die Verwendung stabiler und Feststoff-freier Vorratslösungen. Schon geringfügige Mengen unlöslicher Bestandteile können zum Verstopfen der Dosiereinrichtungen führen und sind deswegen prohibitiv für diese Art der Zufuhr.

Die Herstellung von Spurenelementdüngern kann auf unterschiedliche Weise erfolgen:

Nach DE-C2 313 921 sind durch Vermischen einfacher Metallsalze (Nitrate, Sulfate, Chloride) mit Alkalisalzen der komplexbildenden Aminocarbonsäuren Mehrstoffspurendünger zugänglich. Nachteile dieser Produkte sind ihre Tendenz zur Entmischung sowie unvermeidliche Verbackungen, hervorgerufen durch das eingebrachte Kristallwasser. Zudem sind diese Produkte nicht rückstandsfrei wasserlöslich.

In DE-B 2 846 832 ist die Herstellung pastöser Produkte aus Metallsulfaten, Aminocarbonsäuren und Polyethylenglykolen beschrieben.

Nach DE-A 3 325 059 sind Metallchelate in Granulatform durch Zusatz von Paraffinen, Fettalkoholen oder Fettsäuren zugänglich.

Die Anwendung dieser Granulate wie auch der beschriebenen pastösen Produkte in der Substratkultur verbietet sich wegen ihrer ungenügenden Löslichkeit. Produkte dieser Art lassen sich erfolgreich nur in der Bodendüngung einsetzen.

EP-A53 246 beschreibt die Herstellung fester Mehrstoffspurendünger durch Zusammenbringen der einfachen Metallsalze mit Aminocarbonsäuren bzw. den Alkali-oder Ammoniumsalzen der Aminocarbonsäuren und anschließende Trocknung der so erhaltenen Mischungen. Diese Produkte sind ebenfalls nicht rückstandsfrei wasserlöslich.

Ferner ist bekannt, daß Spurendüngerlösungen aus den Chelatkomplexen der Einzelkomponenten durch Abmischen hergestellt werden können (JA 58 204 892). Dieses Verfahren ist sehr aufwendig, da in getrennten Arbeitsgängen erst die einzelnen Komponenten hergestellt werden müssen.

Stabile Zink-EDTA-Lösungen sind in USP 4,399,070 und stabile Mangan-Chelatlösungen in USP 4,322,361 beschrieben. Diese Verfahren sind allerdings auf die Herstellung von Zink-bzw. Manganchelatlösungen beschränkt. Eisen-, Kupfer-und Kobalt-Chelatlösungen sind nach diesen Verfahren, ebenso wie flüssige Mehrstoffspurendünger, nicht zugänglich.

Feste oder pastöse Produkte, die nach den oben beschriebenen Verfahren hergestellt werden, sind für den Einsatz in der Substratkultur aus mehreren Gründen ungeeignet:

1. Vor der Anwendung müssen die Produkte aufgelöst werden. Dies erfordert zusätzliche technische Einrichtungen. Bedingt durch die schlechte Löslichkeit muß außerdem filtriert werden.

2. Die so hergestellten Lösungen weisen eine niedrige Anwendungskonzentration auf, was das Aufstellen großer Vorratsgefäße notwendig macht.

3. Die so hergestellten Lösungen sind nicht lagerstabil. Insbesondere bei niedrigen Temperaturen kommt es zu unerwünschter Kristallbildung mit der Folge, daß Verstopfungen in den automatischen Dosiervorrichtungen auftreten.

4. Die nach dem Stand der Technik zugänglichen Metallchelate bieten zwar gegenüber den nicht-chelatisierten Metallsalzen eine höhere Verfügbarkeit der Metallionen für die Pflanze. Unter ungünstigen Bedingungen müssen hier jedoch Einschränkungen in Kauf genommen werden. Sŏ beträgt die Verfügbarkeit des Eisens für die Pflanze beispielsweise bei Anwendung von Eisen-EDTA-Chelaten in Nährstofflösungen bei hohen pH-Werten nur noch einen Bruchteil des eingesetzten Eisens.

Es bestand daher die Aufgabe, flüssige Spurenelementdünger zu entwickeln, die eine hohe Verfügbarkeit der Spurenelemente in Nährstofflösungen auch bei hohen pH-Werten gewährleisten, die eine hohe Wirkstoffkonzentration aufweisen und die auch unter ungünstigen äußeren Bedingungen lagerstabil sind und keine Tendenz zur Kristallisation aufweisen.

Diese Aufgabe wird erfindungsgemäß dadurch gelöst, daß Lösungen der Natrium-, Kalium-oder Ammoniumsalze von handelsüblichen Aminocarbonsäuren (z.B. Ethylendiamintetraessigsäure - (EDTA), Diethylentriaminopentaessigsäure (DTPA), N-Hydroxyethyl-ethylendiamintriessigsäure - (HEEDTA), Ethylendiamin-di-(o-hydroxyphenyl-essigsäure) (EDDHA) mit den Nitratsalzen der entsprechenden Spurenelemente umgesetzt werden.

Dabei bilden sich die Spurenelementkomplexsalze (Chelate) oder die gemischten Alkali-bzw. Ammonium-/Spurenelementkomplexsalze der Aminocarbonsäuren neben Alkali/Ammoniumnitrat.

Die Molverhältnisse Metall:Chelatbildner betragen mindestens 0,5:1 und höchstens 1:0 2; vorzugsweise liegen sie zwischen 0,8:1 und 2,5:1.

Die erfindungsgemäßen Lösungen enthalten eines oder mehrere der Spurenelemente Eisen, Kupfer, Kobalt, Mangan oder Zink sowie einen oder mehrere Komplexbildner, z. B. Nitrilotriessigsäure - (NTA), EDTA, DTPA, HEEDTA, EDDHA.

Beispielsweise lassen sich die Lösungen der Natriumsalze der EDTA, DTPA oder HEEDTA bei Raumtemperatur mit wasserfreien oder kristallwasserhaltigen Nitraten des Eisens, Kupfers, Mangans, Zinks oder Kobalts unsetzen. Zur Beschleunigung des Lösevorgangs und der Komplexierung kann gegebenenfalls erwärmt werden. Der pH-Wert der so erhaltenen Chelatlösungen kann gegebenenfalls durch Zusatz von Säuren oder Basen korrigiert werden, soweit er von dem bevorzugten Bereich von pH 4-8 abweicht. Als Säuren kommen hierfür Mineralsäuren, z.B. Salpetersäure, Salzsäure, Phosphorsäure, aber auch die freien Aminocarbonsäuren, beispielsweise EDTA, in Betracht. Als Basen können Alkalioxide, -hydroxide, -carbonate, Ammoniak (gasförmig oder als wäßrige Lösung) sowie die Alkali/Ammoniumsalze der Aminocarbonsäuren eingesetzt werden.

Ferner können die erfindungsgemäßen Lösungen aus den freien Aminocarbonsäuren und Metallnitraten unter Zusatz geeigneter Basen hergestellt werden.

Der Wirkstoffgehalt der erfindungsgemäßen Lösungen läßt sich durch Abdestillieren von Wasser erhöhen. Der Feststoffgehalt der Lösungen sollte insgesamt 60 % nicht überschreiten. Bei höheren Konzentrationen können Ausfällungen auftreten.

Die Lagerstabilität ist ein wichtiges Kriterium für die Anwendbarkeit der Spurenelementlösungen.

Die Lagerstabilität der erfindungsgemäßen Lösungen wurde nach praxisnahen Kriterien geprüft:

- Lagerung bei + 50°C

-Lagerung bei -10°C

-Lagerung bei wechselnden Temperaturen (-10°C bis +30°C).

Lagerstabilität ist gegeben, wenn unter den vorgenannten Bedingungen nach drei Monaten weder Kristallisation noch Sedimentation auftreten.

Die höhe Löslichkeit des Alkali/Ammoniumnitrats bewirkt, daß die so hergestellten Lösungen bei hohen Wirkstoffgehalten auch bei Temperaturen unter 0°C nicht kristallisieren.

Ein weiterer Vorteil der erfindungsgemäßen Lösungen ist, daß die in größeren Mengen phytotoxischen Sulfationen der herkömmlichen Spurendünger durch die gut pflanzenverträglichen Nitrationen ersetzt werden.

Die erfindungsgemäßen Spurenelementlösungen können entweder direkt bzw. nach Verdünnung mit Wasser eingesetzt werden, oder vor der Applikation mit den für die pflanzliche Ernährung notwendigen Hauptdüngemitteln gemischt und als kombinierter Volldünger eingesetzt werden. Durch geeignete Mischungsverhältnisse läßt sich so eine Lösung herstellen, die auf die jeweiligen Pflanzen-und Substratverhältnisse abgestimmt ist.

Die Verfügbarkeit der Spurenelementionen ist in Chelatlösungen generell höher als in Lösungen, die nur die einfachen Metallsalze enthalten.

Besonders wichtig ist eine hohe Verfügbarkeit beim Eisen, da hier in weit höherem Maße als bei anderen Spurenelemente Immobilisierung durch Ausfällung der Eisenionen oder durch Adsorption der Eisenchelate eintreten kann Diese Immobilisierung ist in hohem Maße vom pH-Wert abhängig.

Während in handelsüblichen Chilaten Eisen überwiegend in zweiwertiger Form vorliegt, beinhalten die erfindungsgemäßen Eisenchelatlösungen dreiwertiges Eisen.

Die erfindungsgemäßen Eisenchelatlösungen weisen auch bei hohen pH-Werten eine höhere Stabilität auf als nichtchelatisierte Eisenverbindungen oder handelsübliche feste Eisenchelate.

Die höhere Stabilität zeigt sich sowohl in den konzentrierten Vorratslösungen als auch in Gegenwart der für die Pflanzenernährung wichtigen Haupt-und Spurennährstoffe.

Dies wird durch die nachfolgend beschriebenen Tests klar demonstriert.

Versuchsdurchführung

Zu einer Nährstofflösung, die 10,5 mmol/l Nitrat-

1,5 mmol/l Phosphat-

2,5 mmol/l Sulfat-

0,5 mmol/l Ammonium-

7,0 mmol/l Kalium-

3,8 mmol/l Calcium-

1,0 mmol/l Magnesium-

10,0 mmol/l Mangan-

4,0 mmol/l Zink-

0,5 umol/l Kupfer-

0,5 umol/l Molybdat-und

20,0/umol/l Borat-Ionen

enthält, werden jeweils 50 ppm Eisenionen in Form von Eisen-II-sulfat, handelsüblicher Eisen-II-DPTA sowie Eisen-I-HEEDTA-Chelate und der erfindungsgemäßen Eisen-III-DTPA-und Eisen-III-HEEDTA-Chelate gegeben. Der pH-Wert der Lösungen wird mit Ammoniak oder Phosphorsäure auf Werte von 5,0 bis 9,0 eingestellt. Die Mischungen werden nach dreitägigem Stehen am Licht filtriert und in den Filtraten der Anteil an verfügbarem Eisen bestimmt.

## Anteil an verfügbarem (löslichem) Eisen in %

| pH-Wert | Fe-II-SO$_4$ 7 H$_2$O | Fe-II-DTPA | Fe-III-DTPA (Beispiel 1) | Fe-II-HEEDTA | Fe-III-HEEDTA (Beispiel 2) |
|---|---|---|---|---|---|
| 5,0 | 98 | 100 | 100 | 98 | 100 |
| 6,0 | 74 | 100 | 100 | 85 | 96 |
| 7,0 | 42 | 95 | 98 | 81 | 92 |
| 8,0 | 5 | 90 | 88 | 71 | 81 |
| 9,0 | 1 | 60 | 63 | 48 | 79 |

Die erfindungsgemäßen Lösungen der Chelatkomplexe von Spurenelementen lassen sich generall zur Pflanzenernährung einsetzen, besonders dort, wo die Anwendung flüssiger Produkte dem Einsatz fester Produkte überlegen ist.

Beispielsweise ist die Hydro-oder Substratkultur von Blumen-und Gemüsepflanzen ein bevorzugtes Anwendungsfeld der erfingungsgemäßen Lösungen.

Aber auch zur Blattdüngung im Obst-und Weinbau lassen sich die erfindungsgemäßen Lösungen mit Vorteil einsetzen. Bei Abmischung der erfindungsgemäßen Lösungen mit Pflanzenschutzmitteln läßt sich zudem die Zahl der Arbeitsgänge gegenüber der getrennten Aufbringung der Komponenten verringern.

Die folgenden Beispiele dienen zur näheren Erläuterung der Herstellung der erfindungsgemäßen Lösungen.

Beispiel 1

Zu 757 g einer 40 %igen Lösung des Pentanatriumsalzes der DTPA werden unter Rühren 243 g Eisen-III-nitrat-9-hydrat gegeben und die Lösung kurz zum Sieden erhitzt. Es werden 1000 g einer klaren braunen Lösung erhalten.

pH-Wert: 6,0 Fe-Gehalt: 3,4 % Die Lösung ist lagerstabil.

Durch Abdestillieren von Wasser können Lösungen mit 3,5 % bis 5,0 % Fe erhalten werden. Auch diese Lösungen sind lagerstabil.

Beispiel 2

Zu 680 g einer 40 %igen Lösung des Trinatriumsalzes der HEEDTA werden unter Rühren 320 g Eisen-III-nitrat-9-hydrat gegeben und die Lösung kurz zum Sieden erhitzt. Mit Ammoniak wird der pH-Wert auf 6,0 eingestellt. Es wird eine klare rotbraune Lösung erhalten.

Fe-Gehalt: 4,5 % Die Lösung ist lagerstabil.

Beispiel 3

Zu 688 g einer 40 %igen Lösung des Trinatriumsalzes der HEEDTA werden unter Rühren 193 g Kupfer-II-nitrat-3-hydrat gegeben. Mit HNO$_3$ 65 % wird auf pH 6,0 eingestellt. Es wird eine klare blaue Lösung erhalten.

Cu-Gehalt: 5,7 % Die Lösung ist lagerstabil.

Beispiel 4

Zu 688 g einer 40 %igen Lösung des Trinatriumsalzes der HEEDTA werden unter Rühren 233 g Kobalt-II-nitrat-6-hydrat gegeben und kurz auf 100°C erhitzt. Mit HNO$_3$ 65 % wird auf pH 6,0 eingestellt. Es wird eine klare violette Lösung erhalten.

Co-Gehalt: 5,1 % Die Lösung ist lagerstabil.

Beispiel 5

Zu 503 g einer 40 %igen Lösung des Pentanatriumsalzes der DTPA werden unter Rühren 291 g Kobalt-II-nitrat-6-hydrat gegeben. Es wird eine klare violette Lösung erhalten.

pH-Wert: 7,2 Co-Gehalt: 7,4 % Die Lösung ist lagerstabil.

Beispiel 6

Zu 566 g einer 40 %igen Lösung des Pentanatriumsalzes der DTPA werden unter Rühren 334 g Zinknitrat-6-hydrat gegeben. Mit 65 % $HNO_3$ wird auf pH 5,2 eingestellt. Man erhält eine klare farblose Lösung.

Zn-Gehalt: 8,7 % Die Lösung ist lagerstabil.

Beispiel 7

Zu 723 g einer 40 %igen Lösung des Pentanatriumsalzes der DTPA werden unter Rühren nacheinander 14,9 g Zinknitrat-6-hydrat, 32,6 g Kupfer-II-nitrat-3-hydrat, 107,1 g Eisen-III-nitrat-9-hydrat und 31,4 g Mangan-II-nitrat-4-hydrat gegeben. Die Mischung wird zwei Stunden zum Sieden erhitzt. Mit 65 % $HNO_3$ wird auf pH 6,5 eingestellt. Man erhält eine dunkelgrüne klare Lösung.

Zn: 0,35 %

Cu: 0,95 %

Fe: 1,63 %

Mn: 0,75 %

Die Lösung ist lagerstabil.

Beispiel 8

Zu einer Mischung von 206 g einer 40 %igen Lösung des Trinatriumsalzes der HEEDTA, 300 g einer 40 %igen Lösung des Pentanatriumsalzes der DTPA, 210 g EDTA und 80 g Wasser werden unter Rühren 300 g Mangan-II-nitrat-4-hydrat zugegeben. Die Mischung wird eine Stunde zum Sieden erhitzt. Man erhält eine klare bräunliche Lösung.

pH-Wert: 4,8 Mn-Gehalt: 6,0% Die Lösung ist lagerstabil.

Beispiel 9

Zu einer Aufschlämmung von 292 g EDTA-Säure in 340 g Wasser werden nacheinander unter Rühren 310 g 50 %ige Natronlauge und 291 g Kobalt-II-nitrat-6-hydrat gegeben. Man erhält eine klare violette Lösung.

pH-Wert: 6,4 Co-Gehalt: 4,7 % Die Lösung ist lagerstabil.

Beispiel 10

Zu einer Aufschlämmung von 292 g EDTA-Säure in 390 g Wasser werden nacheinander unter Rühren 290 g 25 %ige Ammoniaklösung und 242 g Kupfer-II-nitrat-3-hydrat gegeben. Man erhält eine klare dunkelblaue Lösung.

pH-Wert: 6 Cu-Gehalt: 5,2% Die Lösung ist lagerstabil.

Beispiel 11

Zu 1197 g einer 40%igen Lösung des Pentanatriumsalzes der DTPA werden unter Rühren 185 g Eisen-III-nitrat-9-hydrat gegeben und die Mischung für 15 Minuten auf 80°C erhitzt. Nach Abkühlen auf 25°C werden nacheinander 55 g mangan-II-nitrat-4-hydrat, 22 g Zinknitrat-6-hydrat, 49 g Kupfer-II-nitrat-3-hydrat, 37 g Borsäure und 50 g Natriummolybdat-2-hydrat zugegeben. Mit 65%iger Salpetersäure wird auf pH 6,8 eingestellt. Man erhält eine klare dunkelgrüne Lösung.

Fe -Gehalt : 1,6 %

Mn -Gehalt : 0,8 %

Zn -Gehalt : 0,3 %

Cu -Gehalt : 0,8 %

B -Gehalt : 0,4 %

Mo -Gehalt : 1,3 %

Die Lösung ist lagerstabil.


**Ansprüche**

1. Lagerstabile wäßrige Lösungen, die Chelatkomplexe der Metalle Eisen, Mangan, Kupfer, Zink oder Kobalt mit Aminocarbonsäuren als Chelatbildner enthalten und die eine hohe Pflanzenverfügbarkeit der Metallionen bei der Anwendung als Spurenelementdünger, auch in Gegenwart der Hauptnährstoffe, gewährleisten, dadurch gekennzeichnet, daß Nitratsalze der entsprechenden Metallionen mit den Chelatbildnern in wäßriger Lösung vermischt sind und per pH-Wert der Lösung 4 bis 8 beträgt.

2. Lösungen nach Anspruch 1, die als Chelatbildner NTA, EDTA, DTPA, HEEDTA, EDDHA einzeln oder in Kombination enthalten.

3. Lösungen nach Ansprüchen 1-2, dadurch gekennzeichnet, daß das Molverhältnis Metalle/Chelatbildner mindestens 0, 5:1, höchstens 1:0,2, vorzugsweise 0,8:1 1,2:1 beträgt.

4. Lösungen nach Ansprüchen 1-3, dadurch gekennzeichnet, daß neben den Chelatkomplexen noch Bor als Borsäure oder Borat und Molybdän als Alkali-oder Ammoniummolybdat enthalten sind.

5. Verfahren zur Herstellung von Lösungen nach Anspruch 1, dadurch gekennzeichnet, daß Lösungen der Natrium-, Kalium-oder Ammoniumsalze der als Chelatbildner eingesetzten Aminocarbonsäuren mit wasserfreien oder kristallwasserhaltigen Nitraten der in Anspruch 1 genannten Metalle umgesetzt werden und der pH-Wert der so erhaltenen Lösungen gegebenenfalls durch Zugabe von Säuren oder Basen auf einen Wert zwischen 4 und 8 eingestellt wird.

6. Verfahren nach Anspruch 5, dadurch gekennzeichnet, daß anstelle der Alkali-oder Ammoniumsalze der Aminocarbonsäuren die freien Säuren in Gegenwart geeigneter Basen umgesetzt werden, wie vor allem Alkalioxide, -hydroxide sowie -carbonate sowie Ammoniak gasförmig oder als wäßrige Lösung.

7. Verwendung der Lösungen nach Anspruch 1-6 zur Spurenelementdüngung in der Hydro-/Substratkultur sowie als Blattdüngemittel.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 767 689 (T. DONOVAN) <br> * Spalte 1, Zeilen 45-71 * <br><br> --- | 1 | C 05 D 9/02 <br> C 07 C 101/28 |
| A | US-A-3 758 540 (A. MARTELL) <br> * Spalte 3, Zeilen 1-7 * <br><br> --- | 1 | |
| P,X | US-A-4 558 145 (N. SMITH) <br> * Spalte 2, Zeilen 21-24 * & <br> EP-A- 0 178 363 <br><br> ----- | 1 | |

| | RECHERCHIERTE SACHGEBIETE (Int. Cl.4) |
|---|---|
| | C 05 D <br> C 05 G <br> C 07 C |

Der vorliegende Recherchenbericht wurde für alle Patentansprüche erstellt.

| Recherchenort | Abschlußdatum der Recherche | Prüfer |
|---|---|---|
| DEN HAAG | 10-09-1986 | VERHOEST J.P.M. |